Europäisches Patentamt

European Patent Office

Office européen des brevets

(19)

(11) Veröffentlichungsnummer : **0 214 989 B2**

(12) # NEUE EUROPÄISCHE PATENTSCHRIFT

(45) Veröffentlichungstag der neuen Patentschrift :
**10.06.92 Patentblatt 92/24**

(51) Int. Cl.⁵ : **F16H 3/66, F16H 47/08, B60K 17/06**

(21) Anmeldenummer : **85903233.6**

(22) Anmeldetag : **11.05.85**

(86) Internationale Anmeldenummer :
**PCT/EP85/00219**

(87) Internationale Veröffentlichungsnummer :
**WO 85/05666 19.12.85 Gazette 85/27**

(54) **PLANETENRÄDER-WECHSELGETRIEBE.**

(30) Priorität : **26.05.84 PCT/EP84/00162**

(43) Veröffentlichungstag der Anmeldung :
**25.03.87 Patentblatt 87/13**

(45) Bekanntmachung des Hinweises auf die
Patenterteilung :
**10.05.89 Patentblatt 89/19**

(45) Bekanntmachung des Hinweises auf die
Entscheidung über den Einspruch :
**10.06.92 Patentblatt 92/24**

(84) Benannte Vertragsstaaten :
**DE FR GB IT NL SE**

(56) Entgegenhaltungen :
**EP-A- 0 075 271
EP-A- 0 080 082
DE-A- 1 630 849
DE-A- 2 935 361
FR-A- 2 208 489
FR-A- 2 486 186
GB-A- 2 017 839
GB-A- 2 023 752**

(56) Entgegenhaltungen :
**GB-A- 2 062 145
US-A- 4 007 648
Patent Abstracts of Japan, Vol. 5, June 1981,
No. 93, page (M-74)(765)
Automatische MB-Getriebe Typ W4A080/R und
W4A110/R, Daimler Benz AG, Kundendienst
8-77 (Seite 112)
ATZ 77(1975)9, Seiten 238-242 und (1975)12,
Seiten 344-348
Autotechnik 4-81, Seiten 49,50**

(73) Patentinhaber : **ZF FRIEDRICHSHAFEN
Aktiengesellschaft
Löwentaler Strasse 100 Postfach 2520
W-7990 Friedrichshafen 1 (DE)**

(72) Erfinder : **DACH, Hans-Jörg
Pfauenweg 7
W-7990 Friedrichshafen 5 (DE)**
Erfinder : **OTT, Anton
Jasminstaffel 7
W-7992 Tettnang (DE)**

(74) Vertreter : **Raue, Reimund
ZF FRIEDRICHSHAFEN Aktiengesellschaft
Löwentalerstrasse 100 Postfach 2520
W-7990 Friedrichshafen 1 (DE)**

EP 0 214 989 B2

**Beschreibung**

Diese Erfindung betrifft ein Planetenräder-Wechselgetriebe nach dem Oberbegriff von Anspruch 1 oder 2.

Solche Getriebe sind z. B. aus der ATZ 85 (1983) 6 Seiten 393 - 398 und aus SAE Technical Paper Series Nr. 820740 bekannt. Beide Getriebe bestehen aus einem Dreigangkoppelgetriebe als Grundgetriebe und der beabsichtigte vierte Gang, der als Schnellgang ausgebildet ist, wird aus einem zum Grundgetriebe in Reihe angeordneten Gruppengetriebe in Verbindung mit dem Grundgetriebe gewonnen. Diese Lösungen haben den Vorteil, daß bewährte Getriebeanordnungen im Prinzip bestehen bleiben und der vorgesehene Schnellgang aus einem einfachen Räderzug, der als Gruppe angeordnet ist gewonnen wird.

Die Anordnung des Gruppengetriebes vor - wie aus dem Beispiel SAE Technical Paper Series erkennbar - und nach dem Grundgetriebe wie es nach ATZ aufgezeigt ist - ist nur im Zusammenhang mit der Auslegung der Getriebelemente von Bedeutung. Wobei beide Ausführungen Vor- und Nachteile aufweisen.

Solche z. B. Vierganggetriebe haben sich praktisch bewährt und bringen im Zusammenhang mit der Auslegung des vierten Ganges als Schnellgang sowie der Ausstattung mit einem Drehmomentwandler bzw. Drehmomentwandler mit Überbrückungskupplung Vorteile besonders im Zusammenhang mit dem Kraftstoffverbrauch. Auch die Schaltbarkeit eines solchen Getriebes ist gut, weil die bei einer allgemein bekannten Gruppenanordnung übliche aber nicht gewollte gleichzeitige Schaltung im Grund- und Gruppengetriebe durch das Anhängen des vierten Ganges an den letzten Gang des Grundgetriebes und in Verbindung mit diesem vermieden wird.

Aus der GB-A-2 062145 (DE-A-2 944 884) ist bekannt, an einem direkten Gang in einem Grundgetriebe zur Gewinnung eines zusätzlichen Ganges und zur Erhöhung der Gesamtübersetzung einen ins Langsame führenden Gang eines angehängten Getriebes anzufügen. Das Gesamtgetriebe ist jedoch kein echtes Planetenräder-Wechselgetriebe in Gruppenanordnung, weil der Schnellgang ein Koppelgang ist.

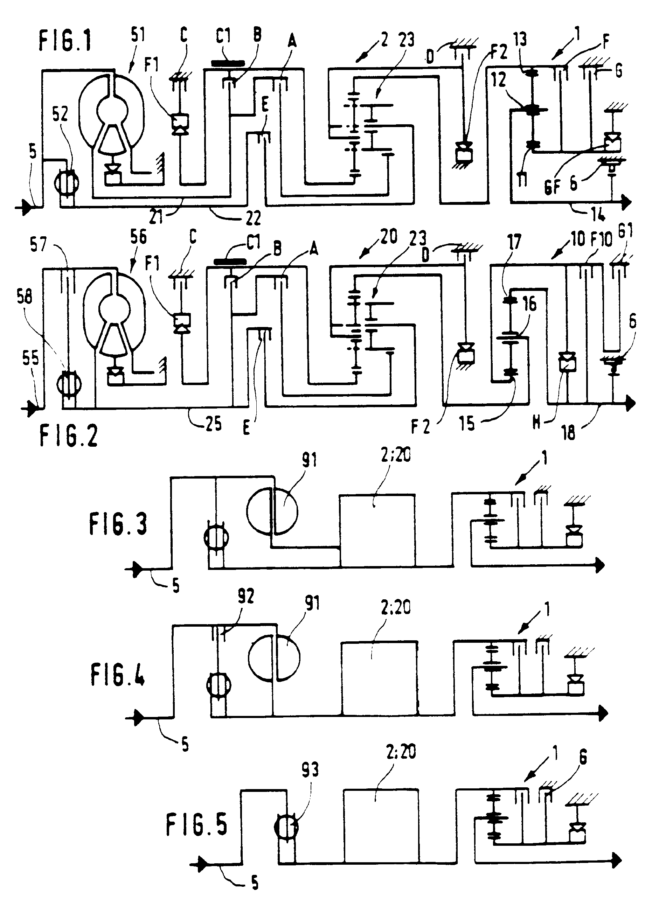

Die GB-A-2 023 752 zeigt ein Planetenräder-Wechselgetriebe in Gruppenanordnung. Nach den Figuren 1 und 3 wird mit einem direkten Gang im Grundgetriebe und einem Gang ins Schnelle vom Gruppengetriebe ein zusätzlicher Gang im Gesamtgetriebe gebildet. Nach den Figuren 2 und 4 ist es möglich, aus dem Gruppengetriebe einen Gang ins Langsame sowohl an einen direkten wie an einen Schnellgang vom Grundgetriebe anzuhängen und dadurch je nach Ausgestaltung einen zusätzlichen Gang zu bilden. Dieser Getriebeaufbau ist für automatisch schaltende Planetenräder-Wechselgetriebe aber nur mit großen Einschränkungen möglich, weil aufgrund der Anordnung von der Bremse 40 kein koaxialer Abtrieb erzielbar ist.

Aus der EP-A-0 075 271 ist ein Planetenräder-Wechselgetriebe in Gruppenanordnung bekannt. Da Gruppengetriebe wird in Verbindung mit einem untersetzten Gang des Grundgetriebes nur 1 x geschaltet. Zwischen Grund und Gruppengetriebe ist jedoch noch ein weiteres Getriebe mit einer von 1 abweichenden Übersetzung angeordnet, mit der die Übersetzung des geschalteten Ganges vom Grundgetriebe im Prinzip wieder aufgehoben wird. Eine Gesetzmäßigkeit des Stufensprunges vom geschalteten in Gruppengetriebe in Zusammenhang mit der Gesamtgangsprungfolge ist nicht erkennbar.

Ferner ist in der ATZ 77 (1975), Helf 12, Seite, 344 bis 348 ein Viergang-Getriebe beschrieben das ein Dreigang-Grundgetriebe mit einem vorgeschalteten Planetensatz aufweist. Der Planetensatz ist nur im ersten und Rückwärtsgang wirksam, während die drei Gänge des Grundgetriebes mit den gleichen Übersetzungen jetzt im zweiten, dritten und vierten Gang arbeiten. Da das Grundgetriebe keinen Schnellgang besitzt, ist auch für das Viergang-Getriebe keine Overdriveausführung möglich. Um das Getriebe für Sondereinsätze vorzusehen, wird das Grundgetriebe entsprechend modifiziert.

Der Erfindung liegt die Aufgabe zugrunde, ein Planetenräder-Wechselgetriebe nach dem Oberbegriff von Anspruch 1 an die unterschiedlichen Forderungen besonders im Zusammenhang mit der Gangzahl, der Gangübersetzung und deren Abstufung besser anzupassen, ohne daß eine gleichzeitige Schaltung im Grund -und gruppengetriebe nötig ist, wobei der Bauaufwand für ein solches Getriebe nicht wesentlich erhöht werden soll, indem ein gleiches Grundgetriebe bei verschiedenen Varianten verwendbar ist. Diese Aufgabe wird mit den kennzeichnenden Merkmalen des Anspruchs 1 in vorteilhafter Weise erfüllt.

Mit einem Gruppengetriebe mit einer Übersetzung ins Langsame ist es möglich die Gesamtübersetzung besonders groß zu gestalten, ohne daß dabei die im Prinzip abnehmende Gangsprungfolge vom ersten bis zum höchsten Gang verlassen werden muß. Die Gesamtübersetzung ist dabei um so größer je tiefer das Gruppengetriebe in der Gesamtgangfolge geschaltet wird. Mit einer Schaltung des Gruppengetriebes in Verbindung mit dem ersten Gang des Grundgetriebes kann neben der größtmöglichen Erhöhung der Gesamtübersetzung auch die Beschleunigung in den tiefen Gängen wesentlich vergrößert werden, so daß neben der Verbesserung der Anpassung im Antriebsstrang auch denkbar ist auf eine Anfahrhilfe wie z. B. einen Drehmomentwandler, zu verzichten.

Je nachdem mit welchem Gang des Grundgetriebes, der aus dem Gruppengetriebe gewonnene zusätzliche Gang gebildet und geschaltet wird, ist die Vergrößerung der Gesamtübersetzung bei gleichem Grundge-

2

triebe unterschiedlich, so daß eine optimale Anpassung möglich wird.

Da das Grundgetriebe bereits einen Schnellgang aufweis, ergeben sich besonders günstige Bedingungen für die Einordnung des aus dem Gruppengetriebe gewonnenen und geschalteren Ganges zwischen die Gänge des Grundgetriebes so daß die Gesamtübersetzung aus einem relativ großen Bereich ausgewählt und der geschaltete Gang des Gruppengetriebes zwischen alle tiefen Gänge des Grundgetriebes und bei einer Übersetzung ins Langsame auch noch vor den ersten Gang im Grundgetriebe gelegt werden kann.

Da die Abstufung der ins Langsame führenden Gänge im Grundgetriebe größer ist als die Abstufung z. B. zwischen dem direkten und einem Schnellgang, läßt sich die Gesamtübersetzung besonders günstig vergrößern, so daß sich die schon aufgezeigten Vorteile ergeben.

Ein bereits bewährtes, automatisch wirkendes Viergang-Planetenräder-Wechselgetriebe, das auch schon einen Schnellgang hat, wird mit einem einfachen Räderzug, der ins Langsame führt, ergänzt. Neben der Gewinnung eines fünften Ganges wird damit bei einer Übersetzung des Gruppengetriebes von z. B. 1,82 also ins Langsame, eine Gesamtübersetzung von 4,39 erzielt. Unter Berücksichtung des bereits im Grundgetriebe bestehenden Schnellganges, ist die Gesamtübersetzung deshalb 5,93.

Mit den Ansprüchen 2 bis 4 wird die Erfindung in vorteilhafter Weise weiter ausgestaltet. Wenn das Gruppengtriebe ins Langsame übersetzt ist, ergibt sich eine relativ große Gesamtübersetzung, so daß auf einen Drehmomentwandler für das Anfahren verzichtet werden und eine z. B. hydrodynamische Anfahr- und Schalthilfe eingesetzt werden kann.

Wie allgemein bekannt ist, ist es möglich, zur Vermeidung von Wirkungsgradverlusten die hydrodynamische Kupplung nach dem Anfahren und nach jeder Schaltung zu überbrücken. Ferner können die zwei Eingangswellen des Grundgetriebes zu einer vereinigt werden.

Wegen der großen Übersetzung ist in einigen Anwendungsfällen ein Dämpfer zwischen Motorabtriebswelle und dem z. B. vor dem Gruppengetriebe angeordneten Grundgetriebe ausreichend. Zum Anfahren ist dabei eine Bremse z. B. des Grundgetriebes bzw. des Gruppengetriebes ausgebildet. Bremsen sind deshalb besonders gut geeignet, weil ein Teil davon feststeht und Druckleitungen für die Steuerung besser anbringbar sind im Vergleich zu Kupplungen.

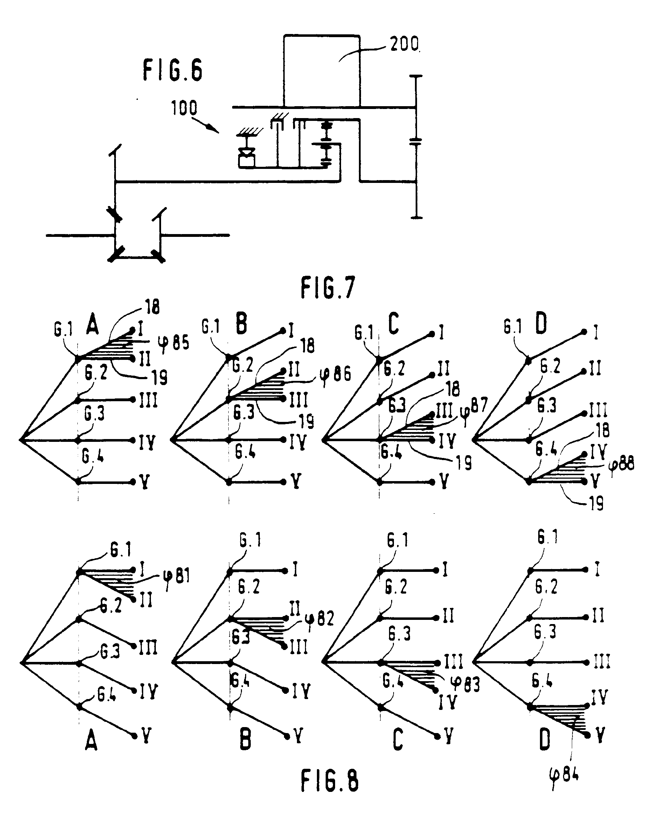

Weitere Einzelheiten der Erfindung werden anhand von Ausführungsbeispielen und anhand von Zeichnungen erläutert, wobei die Einzelheiten der Zeichnung Gegenstand der Erfidnung sind. Die Ausführungsbeispiele nach Fig. 2, soweit die Kombination des Grundgetriebes mit einem ins Schnelle übersetzenden Gruppengetriebes gezeigt wird, Fig. 6, 7A, 7C, 7D, 8A, 8B, 8C, 8D werden nicht vom Schutzumfang erfaßt.

Es zeigen:

Fig. 1 die Anordnung eines Grundgetriebes mit einem ins Langsame übersetzten Gruppengetriebe, mit einem Drehmomentwandler und zwei Eingangswellen für das Grundgetriebe.

Fig. 2 Die Anordnung eines Grundgetriebes mit einem ins Schnell übersetzen Gruppengetriebe und nur einer Eingangswelle für das Grundgetriebe, wobei im Drehmomentwandler noch eine Überbrückungskupplung angeordnet ist.

Fig. 3 Eine Anordnung nach Fig. 1, jedoch mit einer hydrodynamischen Kupplung und einem vereinfacht dargestellten Grundgetriebe.

Fig. 4 Eine Anordnung nach Fig. 3, jedoch noch mit einer Überbrückungskupplung.

Fig. 5 Eine Anordnung nach Fig. 4, mit einer Dämpfeinrichtung zwischen Motorabtriebswelle und Grundgetriebe.

Fig. 6 Eine achsparallele Anordnung eines vereinfacht dargestellten Grundgetriebes mit einem Gruppengetriebe.

Fig. 7 Die mögliche Lage der geschalteten Gänge eines ins Langsame übersetzten Gruppengetriebes.

Fig. 8 Eine Darstellung nach Fig. 7, jedoch mit einem ins Schnelle übersetzten Gruppengetriebe.

Fig. 9 Eine maßstabgerechte Spreizung des Gruppen- und Gesamtgetriebes mit einem geschalteten Gang des ins Langsame übersetzten Gruppengetriebes in Verbindung mit dem zweiten Gang des Grundgetriebes.

Fig. 10 Eine Darstellung nach Fig. 9, jedoch mit einem ins Langsame übersetzten Grundgetriebe, daß in Verbindung mit dem ersten Gang des Gruppengetriebes geschaltet ist.

In Fig. 1 ist ein bekanntes Automatgetriebe 2, als Grund- und ein einfacher Radzug als Gruppengetriebe 1, angeordnet. Die Motorabtriebswelle 5 ist einmal über die Pumpe und Turbine eines Drehmomentwandlers 51 mit einer ersten Eingangswelle 21 trieblich und zum andern über eine Dämpfeinrichtung 52 mit einer zweiten Eingangswelle 22 des Grundgetriebes 2 verbunden. Die erste Eingangswelle 21, über Kupplungen A und B wahlweise, mit den Sonnenrädern eines reduzierten Koppelgetriebes 23 verbindbar, die auch über Bremsen C und C1 oder einen Freilauf F1 festgehalten werden können. Die zweite Eingangswelle 22 ist über eine Kupplung E mit dem Planetenträger des reduzierten Koppelgetriebes verbindbar, der noch mit einem Freilauf F2

verbunden ist und über eine weitere Bremse D festgehalten werden kann. Die Hohlräder des Grundgetriebes 2 und des Gruppengetriebes 1 sind fest verbunden, wobei das Gruppengetriebe selbst aus einem einfachen Radzug mit noch einem Planetenträger 12 und einem Sonnenrad 11 besteht. Die Hohlräder des Grund- und Gruppengetriebes können noch über die Kupplung F mit dem Sonnenrad 11 verbunden werden. Das Sonnenrad 11 ist weiterhin mit einem Freilauf $G_F$ sowie einer Bremse G verbunden. Die Abtriebswelle 14, an der noch ein Induktivgeber 6 zur Ermittlung der Drehzahl angeordnet ist, hat eine feste Verbindung zum Planetenträger 12.

Die Fig. 2 entspricht im Prinzip der Fig. 1, wobei lediglich der einfache Radzug des Gruppengetriebes 10, infolge einer Koppelung des Planetenträgers 16 mit dem Grundgetriebe 20, ins Schnelle übersetzt. Weiter ist der Drehmomentwandler 56 noch mit einer Überbrückungskupplung 57 angeordnet und die Motorabtriebswelle 55 ist nur über eine Eingangswelle 25 mit dem Grundgetriebe 20 verbunden. Die einzelnen getrieblichen Bindungen sind wie folgt:

Eine Motorabtriebswelle 55 ist mit der Pumpe eines Drehmomentwandlers 56 verbunden und der Drehmomentwandler hat noch eine Überbrückungskupplung 57. Die Eingangswelle 25 des Grundgetriebes 20 ist mit der Turbine verbunden bzw. über eine Dämpfeinrichtung 58 und die Überbrückungskupplung 57 mit der Motorabtriebswelle verbindbar.

Die Einganswelle ist über die Kupplungen A, B, E wahlweise mit den Sonnenrädern bzw. den Planetenträger eines reduzierten Koppelgetriebes 23 verbindbar oder kann über Bremsen C, C1 oder einen Freilauf F1 festgehalten werden. Der Planetenträger ist noch mit einem Freilauf F2 verbunden und kann über eine weitere Bremse D festgehalten werden. Das Hohlrad des Grundgetriebes 20 ist mit dem Planetenträger 16 des Gruppengetriebes 10 verbunden und das Sonnenrad 15 kann mit einer Bremse G1 festgehalten und über eine Kupplung F10 und einen Freilauf H mit der Abtriebswelle 18, die mit dem Hohlrad 17 des Gruppengetriebes 10 verbunden ist und noch einen Induktivgeber 6 zur Ermittlung der Drezahl hat, verbunden werden (Fig. 2).

Fig. 3 ist ein weiteres Anwendungsbeispiel, wobei ein schon beschriebenes Grundgetriebe 2, 20 mit einem ins Langsame führenden Gruppengetriebe 1 in Reihe angeordnet sind und die Motorabtriebswelle 5, einmal über eine hydrodynamische Kupplung 91 und zum andern über einen Dämpfer mit dem Grundgetriebe 2, 20 verbunden ist.

In Fig. 4 ist lediglich zwischen der Motorabtriebswelle und dem Dämpfer noch eine Überbrückungskupplung 92 angeordnet und das Grundgetriebe hat nur eine Eingangswelle, mit der sowohl die Turbine der hydrodynamischen Kupplung 91 wie auch der Dämpfer verbunden ist.

Fig. 5 hat zwischen Motorabtriebswelle 5 und dem Grundgetriebe 2, 20 nur einen Dämpfer 93, wobei die Bremse G im Gruppengetriebe 1, als Anfahreinrichtung vorgesehen und entsprechend ausgelegt ist.

In der Anordnung nach Fig. 6 sind das Grundgetriebe 200, sowie das Gruppengetriebe 100 achsparellel, so daß ein günstiger Einbau bei Frontantriebsfahrzeugen ermöglicht wird.

Fig. 7A bis D zeigt in vereinfachter, nicht maßstabgerechter Darstellung, die Gesamtübersetzung (Spreizung) der Gänge eins bis vier des viergängigen Grundgetriebes mit dem ins Langsame übersetzten zweigängigen Gruppengetriebe.
– Untersetzter Gang 18
– Direkter Gang 19
Das Gruppengetriebe mit dem Übersetzungssprung $\varphi$ 85 bis $\varphi$ 88 wird in jeweils einem Getriebe nur einmal geschaltet und zwar entweder,
Fig. 7A zwischen dem ersten und dem zweiten Gang des Grundgetriebes
Fig. 7B zwischen dem zweiten und dem dritten Gang des Grundgetriebes
Fig. 7G zwischen dem dritten (Direktgang) und dem vierten (Schnellgang) des Grundgetriebes
Fig. 7D nach dem vierten Gang
so daß aus dem z. B. viergängigen Grundgetriebe - Gänge 1 bis 4 - bin fünfgängiges Planetenräder-Wechselgetriebe - Gänge I bis V - entsteht.

Die Figuren 8A bis 8D entsprechen im Prinzip den Figuren 7A bis D, lediglich der Übersetzungssprung $\varphi$ 81 bis $\varphi$ 84 des Gruppengetriebes, ins Schnelle führt.

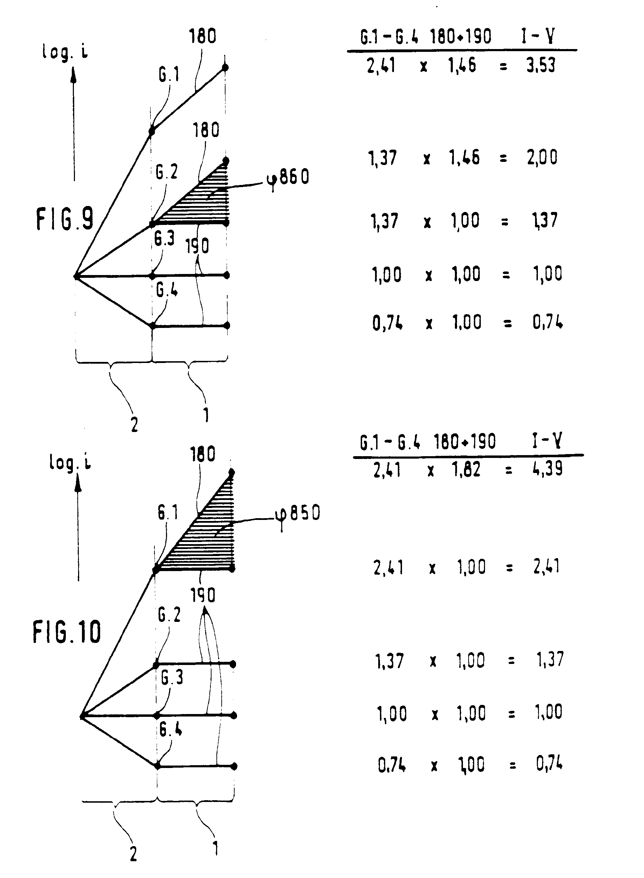

Die Figuren 9 und 10 sind die maßstabgerechten und mit Übersetzung ausgestalteten Figuren 7B (Fig. 9) und 7A (Fig. 10). Die im Prinzip abnehmende Gangsprungfolge vom ersten bis in den höchsten Gang eines viergängigen Automatgetriebes, das als Grundgetriebe wirkt, ist in einfacher Weise erkennbar, wobei in der praktischen Ausgestaltung infolge der Ganzzahligkeit der Zahnräder die Stufenprogression eben nur im Prinzip einhaltbar ist.

Je nachdem wo der Übersetzungssprung $\varphi$ 81 bis $\varphi$ 84 und $\varphi$ 85 bis $\varphi$ 88 zur Wirkung kommt, kann die gesamte Spreizung (Gesamtübersetzungssprung) des erweiterten Getriebes (Gang I bis V) nach Bedarf vergrößert werden. Für den Übersetzungssprung im Gruppengetriebe sind, bei einer Übersetzung ins Langsame, folgende Bedingungen einzuhalten:

$$\varphi\,85 \geq \frac{i1}{i2}; \frac{i2}{i3} \leq \varphi\,86 \leq \frac{i1}{i2}$$

$$\frac{i3}{i4} \leq \varphi\,87 \leq \frac{i2}{i3}; \varphi\,88 \leq \frac{i3}{i4}.$$

Bei einer Übersetzung des Gruppengetriebes ins Schnelle wird dieses zwischen den Gängen des Grundgetriebes geschaltet und der jeweilige Übersetzungssprung entspricht folgenden Bedingungen:

$$\varphi\,81 \geq \frac{i1}{i2}; \frac{i1}{i2} \geq \varphi\,82 \geq \frac{i2}{i3}; \frac{i2}{i3} \geq \varphi\,83 \geq \frac{i3}{i4}.$$

**Bezugszeichen**

| | |
|---|---|
| 1, 10, 100 | Gruppengetriebe |
| 11 | Sonnenrad |
| 12 | Planetenträger |
| 13 | Hohlrad |
| 14 | Abtriebswelle |
| 15 | Sonnenrad |
| 16 | Planetenträger |
| 17 | Hohlrad |
| 18 | Abtriebswelle |
| 2, 20, 200 | Grundgetriebe |
| 21 | erste Eingangswelle |
| 22 | zweite Einganswelle |
| 23 | reduziertes Koppelgetriebe |
| 25 | Einganswelle |
| 5 | Motorabtriebswelle |
| 51 | Drehmomentwandler |
| 52 | Dämpfeinrichtung |
| 55 | Motorabtriebswelle |
| 56 | |
| | Drehmomentwandler |
| 57 | Überbrückungskupplung |
| 6 | Induktivgeber |
| 8 | Übersetzungen im Gruppengetriebe |
| φ 81, φ 82, φ 83, φ 84 | Übersetzungssprung ins Schnelle |
| φ 85, φ 850, φ 86, φ 860 | Übersetzungssprung ins Langsame |
| φ 87, φ 88 | Übersetzungssprung ins Langsame |
| 91 | hydrodynamische Kupplung |
| 92 | Überbrückungskupplung |
| 93 | Dämpfeinrichtung |
| A, B, E, F, F10 | Kupplungen |
| C, C1, D, G, G1 | Bremsen |
| F1, F2, GF, H | Freiläufe |
| Wählhebelstellung allgemein | |
| Wählhebelstellung DE | ökonomischer Bereich |
| Wählhebelstellung DSp | sportlicher Bereich |
| Wählhebelstellung 3 | Begrenzung auf die drei tiefsten Gänge |
| Wählhebelstellung 2 | Begrenzung auf die zwei tiefsten Gänge |
| Wählhebelstellung 1 | Begrenzung auf Gang 1 |

**Patentansprüche**

1. Planetenräder-Wechselgetriebe für Kraftfahrzeuge in Gruppenanordnung mit einem Grund (2)- und einem in Reihe dazu angeordneten Gruppengetriebe (1), wobei das Grundgetriebe aus einem Wechselgetriebe mit festgekoppelten Teilgetrieben und einer vom ersten bis zum höchsten, als Overdrive ausgebildeten Gang im Prinzip abnehmenden Gangsprungfolge (Fig. 7) und das Gruppengetriebe (1) mit einer Übersetzung ins Langsame besteht, wobei nur einmal in der Gesamtgangfölge geschaltet und wobei die Gangzahl des Grundgetriebes um einen einzigen Gang erhöht wird, mit Schaltkupplungen, Bremsen und Freiläufen zur automatischen Schaltung von zumindest vier Vorwärtsgängen, dadurch **gekennzeichnet** , daß das Gruppengetriebe (1) nur in Verbindung mit einem bereits geschalteten, untersetzten Gang (G2) des Grundgetriebes (2) geschaltet wird und der Übersetzungssprung ( φ 86) des Gruppengetriebes (1) kleiner/gleich als der zwischen dem geschalteten Gang (G2) im Grundgetriebe (2) und dem nächst niedrigeren Gang (G1) liegende und größer-/gleich als der zwischen dem geschalteten Gang (G2) und dem nächst höheren Gang (G3) liegende Übersetzungssprung ist, wobei eine Motorabtriebswelle (5) einmal über die Pumpe und Turbine eines Drehmomentwandlers (51) mit einer ersten Eingangswelle (21) trieblich und zum anderen über eine Dämpfeinrichtung (52) mit einer zweiten Eingangswelle (22) des Grundgetriebes (2) verbunden ist, die erste Eingangswelle (21) über Kupplungen (A, B) wahlweise mit den Sonnenrädern eines reduzierten Koppelgetriebes (23) verbindbar ist oder diese über Bremsen (C, C1) oder einen Freilauf (F1) festgehalten werden kann, die zweite Eingangswelle (22) über eine Kupplung (E) mit dem Planetenträger des reduzierten Koppelgetriebes (23) verbindbar, der Planetenträger noch mit einem Freilauf (F2) verbunden ist, und über eine weitere Bremse (D) festgehalten werden kann, daß die Hohlräder des Grundgetriebes (2) und des Gruppengetriebes (1), das als einfacher Radzug mit einem Sonnenrad (11) einem Planetenträger (12) und einem Hohlrad (13) ausgebildet ist, verbunden sind und über eine Kupplung (F) auch mit dem Sonnenrad (11) verbunden werden können, wobei dieses noch mit einem Freilauf (G_F) und einer Bremse (G) festgelegt werden kann und wobei die Abtriebswelle (14), die noch einen Induktivgeber (6) zur Ermittlung der Drehzahl hat, mit dem Planetenträger (12) des Gruppengetriebes (1) verbunden ist (Fig. 1; Fig. 7A - 7B).

2. Planetenräder-Wechselgetriebe nach Anspruch 1, dadurch **gekennzeichnet** , daß zwischen der Motorabtriebswelle (5) und dem Planetenräder-Wechselgetriebe anstelle des Drehmomentwandlers (51) eine hydrodynamische Kupplung (91) angeordnet ist, die mit einer Überbrückungskupplung (92) versehen ist.

3. Planetenräder-Wechselgetriebe nach Anspruch 1, dadurch **gekennzeichnet** , daß zwischen der Motorabtriebswelle (5) und dem Planetenräder-Wechselgetriebe nur eine Dämpfeinrichtung (93) angeordnet ist und die Bremse (D) im Grundgetriebe (2, 20) als Anfahreinrichtung ausgelegt ist.

4. Planetenräder-Wechselgetriebe nach Anspruch 1, dadurch **gekennzeichnet** , daß zwischen der Motorabtriebswelle (5) und dem Planetenräder-Wechselgetriebe nur eine Dämpfeinrichtung (93) angeordnet ist und die Bremse (G) im Gruppengetriebe (1) als Anfahreinrichtung ausgelegt ist.

## Claims

1. A planet wheel change gear for motor vehicles in group arrangement, comprising a main gear (2) and a group gear (1) in series therewith, the main gear comprising a change gear with permanently coupled component gears and a gear change sequence in the form of an overdrive and decreasing substantially from the first to the highest gear (Fig. 7) and the group gear (1) has a step-down facility , only one shift being made in the entire gear sequence and the number of speeds in the main gear being increased by a single speed, with clutches, brakes and freewheels for automatic shifting of at least four forward gears, characterised in that the group gear (1) is shifted only in conjunction with an already shifted stepped-down gear (G2) of the main gear (2) and the transmission ratio (φ 86) of the group gear (1) is less than or equal to the transmission ratio between the shifted gear (G2) in the main gear (2) and the next lower gear (G1) and is greater than or equal to the transmission ratio between the shifted gear (G2) and the next higher gear (G3), an engine output shaft (5) being on the one hand connected for drive purposes to a first input shaft (21) via the pump and turbine of a torque converter (51) and on the other hand connected to a second input shaft (22) of the main gear (2) via a damping device (52), the first input shaft (21) being optionally connected via clutches (A, B) to the sun wheels of a stepped-down coupled gear (23) or locked by brakes (C, C1) or a freewheel (F1), the second input shaft (22) being connectable via a clutch (E) to the satellite carrier of the stepped-down coupled gear (23), the satellite carrier also being connected to a freewheel (F2) and lockable via an additional brake (D), the annular gearwheels of the main gear (2) and the group gear (1), which is a simple gear train with a sun wheel (11), a satellite carrier (12) and an annular gearwheel (13), are connected and can also be connected via a clutch (F) to the sun wheel (11), the sun wheel also being lockable by a freewheel (G_F) and a brake (G), and the output shaft (14), which also has an inductive pick-up (6) for determining the speed, is connected to the satellite carrier (12) of the group gear (1), (Fig.1; Figs. 7A - 7B).

2. A planet wheel change gear according to claim 1, characterised in that instead of the torque converter (51), a hydrodynamic clutch (91) is disposed between the engine output shaft (5) and the planet wheel change gear and is provided with a bypass clutch (92).

3. A planet wheel change gear according to claim 1, characterised in that only one damping device (93) is disposed between the engine output shaft (5) and the planet wheel change gear, and the brake (D) in the main gear (2, 20) is designed as a starting device.

4. A planet wheel change gear according to claim 1, characterised in that only one damping device (93) is disposed between the engine output shaft (5) and the planet wheel change gear, and the brake (G) in the group gear (1) is designed as a starting device.

**Revendications**

1. Boîte de vitesses à engrenages planétaires pour véhicules à moteur, agencée en groupes comprenant une boîte de base (2) et un groupe-relais (1) disposé en série avec celle-ci, dans laquelle : la boîte de base est une boîte de vitesses à jeux d'engrenages à couplage fixe, avec une suite de rapports (fig. 7) qui est en principe décroissante du premier rapport au rapport le plus élevé, formé par une surmultiplication; le groupe-relais (1) comporte un rapport réducteur; un changement du rapport global se fait par une seule commutation; et le nombre de rapports de la boîte de base n'est augmenté que d'une unité; la boîte comportant des embrayages, des freins et des roues libres pour des changements automatiques entre au moins quatre rapports de marche avant, caractérisée en ce qu'un changement de rapport dans le groupe-relais (1) n'est effectué qu'en combinaison avec un rapport réducteur déjà enclenché (**G2**) de la boîte de base (2), et en ce que le saut de rapport de transmission ($\varphi$86) entre les rapports du groupe-relais (1) est inférieur ou égal au saut entre le rapport enclenché (**G2**) de la boîte de base (2) et le rapport immédiatement inférieur (**G1**), et supérieur ou égal au saut entre le rapport enclenché (**G2**) et le rapport immédiatement supérieur (**G3**), et dans laquelle : un arbre de sortie (5) du moteur est en liaison motrice tantôt avec un premier arbre d'entrée (21) de la boîte de base (2), via la pompe et la turbine d'un convertisseur de couple (51), et tantôt avec un second arbre d'entrée (22) de cette boîte de base (2) via un dispositif amortisseur (52); le premier arbre d'entrée (21) est agencé pour être relié sélectivement par des embrayages (**A, B**) aux pignons planétaires d'un réducteur double (23) ou peut être bloqué par des freins (**C, C1**) ou par une roue libre (**F1**); le second arbre d'entrée (22) est agencé pour être relié par un embrayage (**E**) au porte-satellites du réducteur double (23); ledit porte-satellites est en outre relié à une roue libre (**F2**) et peut être bloqué par un autre frein (**D**); en ce que les couronnes de trains planétaires de la boîte de base (2) et du groupe-relais (1), lequel est constitué d'un train d'engrenages simples comprenant un pignon planétaire (11), un porte-satellites (12) et une couronne (13), sont liées et peuvent aussi être reliées audit pignon planétaire (11) par un embrayage (**F**), ce pignon planétaire pouvant encore être bloqué par une roue libre (**G$_F$**) et par un frein (**G**), et l'arbre de sortie (14), qui comporte en outre un capteur inductif (6) pour mesurer la vitesse de rotation, étant relié au porte-satellites (12) du groupe-relais (1) (fig. 1; fig. 7A-7B).

2. Boîte de vitesses selon la revendication 1, caractérisée en ce qu'un embrayage hydrodynamique (91), pourvu d'un embrayaye de pontage (92), est disposé à la place du convertisseur de couple (51) entre l'arbre de sortie (5) du moteur et la boîte de vitesses à engrenages planétaires.

3. Boîte de vitesses selon la revendication 1, caractérisée en ce que seul un dispositif amortisseur (93) est prévu entre l'arbre de sortie (5) du moteur et la boîte de vitesses à engrenages planétaires, et en ce que le frein (**D**) prévu dans la boîte de base (2, 20) est agencé comme dispositif de démarrage.

4. Boîte de vitesses selon la revendication 1, caractérisée en ce que seul un dispositif amortisseur (93) est prévu entre l'arbre de sortie (5) du moteur et la boîte de vitesses à engrenages planétaires, et en ce que le frein (**G**) prévu dans le groupe-relais (1) est agencé comme dispositif de démarrage.

FIG.1

FIG.2

FIG.3

FIG.4

FIG.5

FIG.6

FIG.7

FIG.8

FIG.9

| G.1 – G.4 | | 180+190 | | I – V |
|---|---|---|---|---|
| 2,41 | x | 1,46 | = | 3,53 |
| 1,37 | x | 1,46 | = | 2,00 |
| 1,37 | x | 1,00 | = | 1,37 |
| 1,00 | x | 1,00 | = | 1,00 |
| 0,74 | x | 1,00 | = | 0,74 |

FIG.10

| G.1 – G.4 | | 180+190 | | I – V |
|---|---|---|---|---|
| 2,41 | x | 1,82 | = | 4,39 |
| 2,41 | x | 1,00 | = | 2,41 |
| 1,37 | x | 1,00 | = | 1,37 |
| 1,00 | x | 1,00 | = | 1,00 |
| 0,74 | x | 1,00 | = | 0,74 |